# EUROPÄISCHE PATENTANMELDUNG

(11) **EP 1 010 586 A2**
(43) Veröffentlichungstag der Anmeldung: **21.06.2000**
(21) Anmeldenummer: 99123164.8
(22) Anmeldetag: 22.11.1999
(51) Int. Cl.: B60R 19/00

(54) **Airbag-Anordnung im Motorraum eines Fahrzeugs**

(30) Priorität: 18.12.1998 DE 19858639
(71) Anmelder: Volkswagen Aktiengesellschaft, 38436 Wolfsburg (DE)
(72) Erfinder: Laumann, Alfons, Dipl.-Ing., 38518 Gifhorn (DE)

(57) **Zusammenfassung**

Die Erfindung bezieht sich auf eine Airbag-Anordnung im Motorraum eines Fahrzeugs zur Abstützung eines aus dem Motor und dem Getriebe gebildeten Aggregates. Sie löst die Aufgabe, einen Airbag so im Motorraum anzuordnen, daß die Energieaufnahme des Fahrzeugs bei einem Frontalcrash weiter verbessert und damit die Gefahr des Eindringens des Aggregates in die Fahrgastzelle verringert werden. Außerdem soll die Gefahr einer Intrusion der Längsträger in einen Unfallgegener reduziert werden. Dazu ist im Bereich der vor dem Aggregat (1) endenden Längsträger (2) zwischen dem Aggregat (1) und dem Frontend (3) wenigstens ein Airbagmodul (6) mit einem Airbag (6a) angeordnet.

## Beschreibung

Die Erfindung betrifft eine Airbaganordnung im Motorraum eines Fahrzeuges zur Verbesserung der Energieaufnahme bei einem Frontalaufprall und zur Verringerung der Intrusion einzelner Bauteile in einen Unfallgegner.

Aus der WO 95/ 29078 ist es bekannt, die Fahrgastzelle eines Fahrzeuges bei einem Frontalaufprall desselben vor einer Deformation durch den Motor und/ oder das Getriebe dadurch zu schützen, daß zwischen der Frontwand der Fahrgastzelle und dem Motor und/ oder Getriebe wenigstens ein Airbag entfaltet ist. Dieser wird in Verbindung mit einer Sensorik aktiviert und bildet zusätzlich zu den Fahrzeug-Längsträgern eine energieabsorbierende Barriere, die eine durch den Crash verursachte Relativbewegung zwischen dem Motor und/ oder Getriebe einerseits und der Frontwand der Fahrgastzelle andererseits energieaufnehmend hemmt. Dabei kann der Airbag vorteilhaft an die räumlichen Gegebenheiten im Anordnungsraum angepaßt und mit einer möglichst großen Anlagefläche für die Aggregate bzw. die Frontwand der Fahrgastzelle versehen sein, damit die Aufprallkraft auf eine möglichst große Fläche verteilt und die auf die Flächeneinheit bezogene Aufprallenergie reduziert werden.

Der Airbag kann somit eine Deformation der Fahrgastzelle oder gar des Eindringens von Aggregateteilen in die Fahrgastzelle verringern und auch die Wucht des Eindringens reduzieren und bei einem Frontalauf prall mit geringerer Geschwindigkeit auch verhindern helfen. Die vorbeschriebene Airbaganordnung stellt eine Erhöhung des Insassenschutzes dar.

Sie ist wirksam, wenn es zu einer Anlage des Aggregates am Hindernis und zu einer Deformation der Fahrzeug-Längsträger hinter dem Aggregat kommt. In dieser Phase eines Crashs erfolgt die Abstützung des Fahrzeugs am Hindernis durch die außenliegenden Längsträger und im mittleren Bereich oberhalb des Tunnels durch den angeordneten Airbag.

Es ist Aufgabe der Erfindung, die Energieaufnahme eines Fahrzeugs durch eine Airbaganordnung in dessen Motorraum nach dem Oberbegriff des Anspruchs 1 weiter zu verbessern und damit die Gefahr des Eindringens des Aggregates in die Fahrgastzelle zu verringern. Darüber hinaus soll die Gefahr einer Intrusion der Längsträger in einen Unfallgegner reduziert werden.

Diese Aufgabe wird bei einer Airbag-Anordnung im Motorraum des Fahrzeugs dadurch gelöst, daß im Bereich der vor dem Aggregat endenden Längsträger wenigstens ein Airbagmodul mit einem sich bei einem Frontalaufprall in den Raum zwischen dem Aggregat und dem Frontend des Fahrzeugs entfaltenden Airbag angeordnet ist.

Bei einem Frontalaufprall wird die Aufprallenergie vor dem Aggregat in die Längsträger eingeleitet. Diese werden in Abhängigkeit von der Masse und der Geschwindigkeit des Fahrzeugs deformiert, bevor das Aggregat als Bestandteil dieser Masse zur Anlage an das Hindernis gelangt. Das Aggregat wird bei dieser Längsträgerdeformation bis zum Zeitpunkt der Anlage am Hindernis verzögert, wobei das Aggregat maßgeblich an der Verformung der Längsträger beteiligt ist, da seine Masse einen großen Teil an der Gesamtmasse des Fahrzeugs ausmacht.

Der Vorteil der Anordnung eines Airbags zwischen dem Aggregat und dem Frontend liegt darin, daß dieser bei einem Frontalaufprall im aktiviertem Zustand zusätzlich zur Energieabsorption durch die Längsträger Auf prallenergie aufnimmt, so daß das Aggregat stärker verzögert wird, bis es auf das Hindernis stößt. Die Aufprallenergie kann dann schon so weit absorbiert sein, daß die Rest-Aufprallenergie für eine Deformation der Längsträger hinter dem Aggregat nicht mehr ausreicht oder die Längsträger diese Rest-Aufprallenergie unter Deformation absorbieren, ohne daß es zu einer Deformation des vorderen Bereiches der Fahrgastzelle oder gar zu einem Eindringen des Aggregates in diese kommt. Überdies ermöglicht der vor dem Aggregat angeordnete Airbag eine großflächige Kraftübertragung, durch die ein 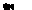 dolchartiges" Eindringen, insbesondere der Fahrzeuglängsträger in einen Unfallgegner weitgehend verhindert werden kann.

Der Airbag kann auch dazu genutzt werden, um das Aggregat aus seiner Lagerung zu reißen und in Verbindung mit einer geeigneten Vorrichtung zu einer Bewegung nach hinten/ unten zu veranlassen. Damit gelangt das Aggregat teilweise unter den kritischen Bereich der Frontplatte (Spritzplatte), hinter dem der Fußraum der Fahrgastzelle liegt, so daß eine Deformation in diesem Bereich weniger stark ausfällt.

Die Airbag-Anordnung im Vorderwagen erhöht die passive Sicherheit des Fahrzeuges. Sie kann auch zu einer leichteren und weniger energieabsorbierenden Konstruktion der für die passive Sicherheit eingesetzten Karosseriebauteile führen und damit zu einer Gewichtsreduzierung und Kraftstoffersparnis beitragen.

Zwischen dem Aggregat und dem Airbag kann eine Prallplatte für diesen angeordnet werden, um den Airbag vor erhitzten und scharfkantigen Bauteilen, die am Aggregat angeordnet sind, zu schützen. Diese kann zudem auch energieabsorbierend ausgeführt sein.

Um die Deformationsgefahr der Fahrgastzelle weiter zu verringern bzw. eine Deformation derselben zu reduzieren, ist es vorteilhaft, diese Airbag-Anordnung durch die Anordnung eines Airbag zwischen der Frontplatte der Fahrgastzelle und dem Aggregat zu ergänzen. Dieser zusätzliche Airbag kann bei einer crashbedingten Verzögerung des Aggregates aktiviert werden und wirkt dann in Verbindung mit einer Längsträgerdeformation auch über den mittleren Bereich (Tunnel) hinter dem Aggregat energieabsorbierend und bezüglich der Fahrgastzelle deformationsmindernd.

Des weiteren können Airbags zusätzlich in den vorderen Radkästen fahrgastzellenseitig angeordnet sein.

Die Erfindung wird nachstehend anhand eines Ausführungsbeispiels erläutert. In der zugehörigen Zeichnung zeigen schematisch:
- Fig. 1:: eine Airbag-Anordnung in einer Seitenansicht und
- Fig. 2:: die Airbag-Anordnung in einem Vertikalschnitt.

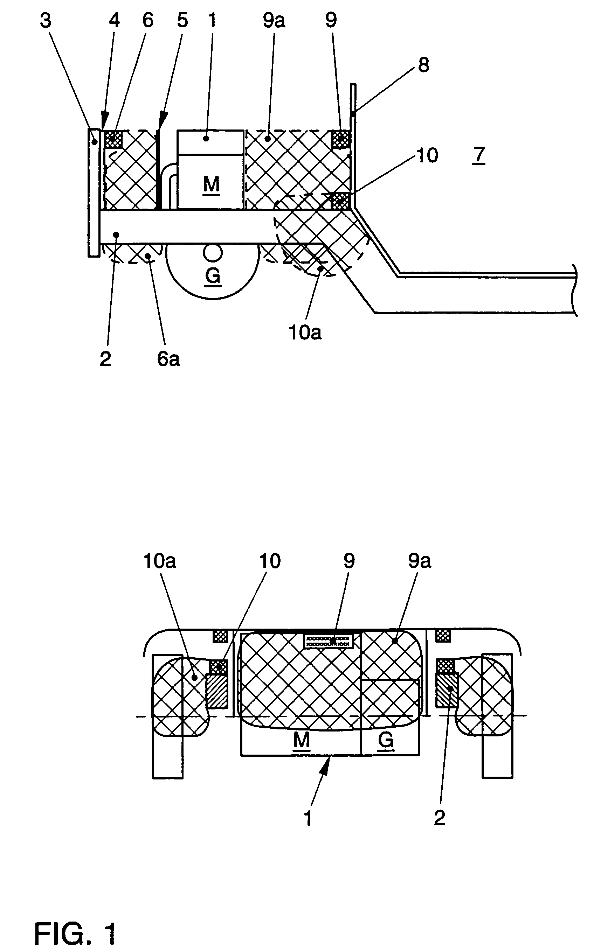

In Fig. 1 ist eine Airbag-Anordnung im Motorraum eines Fahrzeugs zur Abstützung des aus dem Motor M und dem Getriebe G gebildeten Aggregates 1 mit querliegendem Motor dargestellt. Dieses ist zwischen zwei Längsträgern 2 befestigt, die mit einem Frontend 3 mit einem Frontklappenschloßträger 4 abgeschlossen sind. Vor dem Aggregat 1 ist eine hitzebeständige Prallplatte 5 quer zur Fahrzeuglängsachse angeordnet. Im oberen Bereich des Frontklappenschloßträgers 4 ist ein Airbagmodul 6 zur Aktivierung eines Airbags 6a in Richtung auf diese Prallplatte 5 angebracht, der mit einer Sensorik (nicht dargestellt) in Wirkverbindung steht. Zwischen der dem Aggregat 1 und der die Fahrgastzelle 7 motorraumseitig abschließenden Spritzwand 8 sind weitere Airbagmodule 9 und 10 angebracht, die im Falle eines Frontalaufpralls jeweils einen Airbag 9a und 10a entfalten und das Fahrzeug mit der Fahrgastzelle 7 gegenüber dem Aggregat 1 abstützen, wobei die Airbagmodule 10 jeweils in einem Radkasten angeordnet sind und die entfalteten Airbags 10a den Fußraumbereich der Fahrgastzelle 7 abstützen. In Fig. 2 ist in einer Draufsicht auf einen vor das Aggregat 1 gelegten Vertikalschnitt die Anordnung der Airbagmodule 9 und 10 und der entfalteten Airbags 9a und 10a dargestellt.

Bei einem Frontalaufprall wird der Airbagmodul 6 aktiviert, und der Airbag 6a entfaltet sich in den zwischen dem Frontend 3 und der Prallplatte 5 gegebenen Freiraum und unterstützt die Energieabsorption durch die Längsträger 2 vor dem Aggregat 1 mit der Folge, daß dieses (1) verzögert wird, bevor es am Frontend 3 zur Anlage gelangt. Beim Anstoßen des Aggregates 1 am Frontend 3 werden die Airbagmodule 9 und 10 aktiviert und die Airbags 9a und 10a entfaltet. Diese stützen nun den hinter dem Aggregat 1 befindlichen Fahrzeugbereich, insbesondere die Insassenzelle 7, in Verbindung mit den hinter dem Aggregat 1 befindlichen Bereichen der Längsträger 2 energieabsorbierend ab.

### BEZUGSZEICHENLISTE

- 1: Aggregat
- 2: Längsträger
- 3: Frontend
- 4: Frontklappenschloßträger
- 5: Prallplatte
- 6: Airbagmodul
- 6a: Airbag
- 7: Fahrgastzelle
- 8: Spritzwand
- 9: Airbagmodul
- 9a: Airbag
- 10: Airbagmodul
- 10a: Airbag
- M: Motor
- G: Getriebe

## Patentansprüche

1. Airbag-Anordnung im Motorraum eines Fahrzeugs zur Abstützung eines aus dem Motor und dem Getriebe gebildeten und zwischen Längsträgern angeordneten Aggregates, **dadurch gekennzeichnet,** daß im Bereich der vor dem Aggregat (1) endenden Längsträger (2) zwischen dem Aggregat (1) und dem Frontend (3) wenigstens ein Airbagmodul (6) mit einem Airbag (6a) angeordnet ist.

2. Airbag-Anordnung nah Anspruch 1, **dadurch gekennzeichnet,** daß der Airbagmodul (6) im Bereich des Frontklappenschloßträgers (4) angeordnet ist.

3. Airbag-Anordnung nach Anspruch 1, **dadurch gekennzeichnet,** daß vor dem Aggregat (1) quer zur Fahrzeuglängsachse eine Prallplatte (5) für den aktivierten Airbag (6a) angeordnet ist.

4. Airbag-Anordnung nach Anspruch 3, **dadurch gekennzeichnet,** daß die Prallplatte (5) eine energieabsorbierende Struktur aufweist.

5. Airbag-Anordnung nach Anspruch 1, **dadurch gekennzeichnet,** daß zusätzlich hinter dem Aggregat (1) zwischen diesem und der Frontplatte (8) der Fahrgastzelle (7) wenigstens ein Airbagmodul (9) mit einem Airbag (9a) angeordnet ist.

6. Airbag-Anordnung nach Anspruch 1, **dadurch gekennzeichnet,** daß zusätzlich in jedem vorderen Radkasten fahrgastzellenseitig ein Airbagmodul (10) mit einem Airbag (10a) angeordnet ist.

7. Airbag-Anordnung nach Anspruch 1, **dadurch gekennzeichnet,** daß der Airbag (6a; 9a) aus einem hitzebeständigen Material besteht.
